**Europäisches Patentamt**

**European Patent Office**

**Office européen des brevets**

(19)

(11) **EP 1 469 613 A1**

(12) **EUROPÄISCHE PATENTANMELDUNG**

(43) Veröffentlichungstag:
**20.10.2004 Patentblatt 2004/43**

(51) Int Cl.⁷: $H04B\ 7/06$, $H04L\ 27/26$

(21) Anmeldenummer: 03008902.3

(22) Anmeldetag: **16.04.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **SIEMENS AKTIENGESELLSCHAFT**
**80333 München (DE)**

(72) Erfinder:
• **Bossert, Martin, Prof.**
  **89075 Ulm (DE)**

• **Costa, Elena, Dr.**
  **85748 Garching (DE)**
• **Hübner, Axel**
  **89073 Ulm (DE)**
• **Lott, Matthias**
  **82061 Neuried (DE)**
• **Schulz, Egon, Dr.**
  **80993 München (DE)**

(54) **Verfahren und Sender zur Übertragung von Daten in einem Mehrträgersystem über eine Mehrzahl von Sendeantennen**

(57)     Die Erfindung betrifft ein Verfahren zur Übertragung von Daten (S) per Funk, wobei zur Übertragung ein in eine Mehrzahl von Subträgern aufgeteiltes Frequenzband und eine Mehrzahl von Antennen (TX1, TX2, TX3) verwendet wird, wobei die Daten (S) in eine der Anzahl der Mehrzahl von Subträgern entsprechende Anzahl an von jeder Antenne (TX1, TX2, TX3) jeweils zu übertragenden Elementen ($S_1$, $S_2$, $S_3$) aufgeteilt werden, wobei für jede Antenne (TX1, TX2, TX3) jedes Element ($S_1$, $S_2$, $S_3$) jeweils einem Subträger zur Übertragung zugeordnet wird, und wobei mindestens zwei Antennen (TX1, TX2, TX3) auf mindestens einem Subträger unterschiedliche Elemente ($S_1$, $S_2$, $S_3$) übertragen. Erfindungsgemäß wird vor einer OFDM-Modulation (OFDM) für jede Antenne (TX1, TX2, TX3) jedes Element ($S_1$, $S_2$, $S_3$) mit einem antennen- und elementspezifischen Faktor multipliziert. Alternativ kann erfindungsgemäß nach einer OFDM-Modulation (OFDM) für mindestens eine Antenne (TX1, TX2, TX3) eine Umordnung der zeitlichen Reihenfolge des aufgrund der OFDM-Modulation (OFDM) erzeugten zeitabhängigen Signals erfolgen. Weiterhin betrifft die Erfindung einen Sender zur Durchführung des Verfahrens.

FIG 1

EP 1 469 613 A1

**Beschreibung**

Die Erfindung betrifft ein Verfahren zur Übertragung von Daten per Funk nach dem Oberbegriff des Anspruchs 1 und des Anspruchs 3.

Weiterhin betrifft die Erfindung eine Sendevorrichtung zur Übertragung von Daten per Funk über eine Mehrzahl von Antennen nach dem Oberbegriff des Anspruchs 8.

In Funkkommunikationssystemen werden Daten (beispielsweise Sprache, Bildinformation, Videoinformation, SMS (Short Message Service) oder andere Daten) mit Hilfe von elektromagnetischen Wellen über eine Funkschnittstelle zwischen sendender und empfangender Station übertragen. Das Abstrahlen der elektromagnetischen Wellen erfolgt dabei mit Trägerfrequenzen, die in dem für das jeweilige System vorgesehenen Frequenzband liegen. Ein Funkkommunikationssystem umfasst hierbei Teilnehmerstationen, z.B. Mobilstationen, Basisstationen, z.B. Node B's oder andere Funkzugangseinrichtungen, sowie gegebenenfalls weitere netzseitige Einrichtungen.

Um eine möglichst effiziente Übertragung von Daten zu gewährleisten, zerlegt man das gesamte zur Verfügung stehende Frequenzband in mehrere Subträger (Mehrträgerverfahren). Die den Mehrträgersystemen, auch als OFDM (Orthogonal Frequency Division Multiplexing) bezeichnet, zugrunde liegende Idee ist es, die Ausgangssituation der Übertragung eines breitbandigen Signals in die Übertragung einer Menge von schmalbandigen orthogonalen Signalen zu überführen.

Bei OFDM werden für die Subträger zeitlich annähernd rechteckige Pulsformen verwendet. Der Frequenzabstand der Sub-Träger wird derart gewählt, dass im Frequenzraum bei derjenigen Frequenz, bei welcher das Signal eines Subträgers ausgewertet wird, die Signale der anderen Subträger einen Nulldurchgang aufweisen. Somit sind die Subträger orthogonal zueinander. Eine spektrale Überlappung der Subträger und daraus resultierend eine hohe Packungsdichte der Subträger ist erlaubt, da die Orthogonalität eine Unterscheidbarkeit der einzelnen Subträger sicherstellt. Daher wird eine bessere Spektraleffizienz als bei dem einfachen FDM (Frequency Division Multiplexing) erreicht.

Aufgrund des Dispersionsverhaltens von Funkkanälen ist es vorteilhaft, in OFDM-Systemen zur Erhöhung der Zuverlässigkeit der Datenübertragung eine Diversität z.B. im Raumbereich einzuführen. Hierzu wird senderseitig eine Mehrzahl von Antennen eingesetzt, welche jeweils die gleichen Informationen übertragen. Beim Empfang werden die unterschiedlichen Fluktuationen unterliegenden Signale kombiniert. Beispiele für derartige Verfahren sind das CDD (Cyclic Delay Diversity) Verfahren, vorgestellt in

A. Damman, S. Kaiser: Low Complex Standard Conformable Antenna Diversity Techniques for OFDM Systems and its Application to the DVB-T System, Proceedings of the 4th International ITG Conference on Source and Channel Coding, Berlin 2002,

in dem durch die verschiedenen Antennen virtuelle Echos des auf einer Antenne gesendeten Signals erzeugt werden. Es wurde jedoch in

A. Huebner, M. Bossert, F. Schuehlein, H. Haas, E. Costa: On Cyclic Delay Diversity in OFDM Based Transmission Schemes, Proceedings of the 7th International OFDM-Workshop, Hamburg 2002

gezeigt, dass dieses Verfahren nur in Kombination mit Kanalkodierung, wie z.B. Faltungskodierung, sinnvoll zur Verminderung von Übertragungsfehlern eingesetzt werden kann.

Weiterhin kann zur OFDM-Übertragung mit einer Mehrzahl von Antennen das Alamouti-Verfahren nach

S.M. Alamouti: A Simple Transmit Diversity Technique for wireless Communications, IEEE Journal on Selected Areas in Communications, vol. 16, no. 8, S. 1451-1458, Oktober 1998

eingesetzt werden, bei welchem zwei aufeinanderfolgende Symbole senderseitig so verarbeitet werden, dass zwei Sendeantennen zueinander orthogonale Signale senden. Als nachteilig am Alamouti-Verfahren erweist es sich, dass empfängerseitig ein aufwendiger, modifizierter Demodulator eingesetzt werden muss, und dass für die Übertragung keine beliebige Anzahl an Antennen eingesetzt werden kann, ohne dass Einschränkungen bezüglich der Wahl des Modulationsverfahrens resultieren.

Der Erfindung liegt die Aufgabe zugrunde, ein Verfahren und einen Sender der eingangs genannten Art aufzuzeigen, welche eine effiziente Übertragung von Daten in einem Mehrträgersystem unter Ausnutzung der Raumdiversität erlauben.

Diese Aufgabe wird hinsichtlich des Verfahrens durch ein Verfahren mit den Merkmalen des Anspruch 1 gelöst.

Vorteilhafte Ausgestaltungen und Weiterbildungen sind Gegenstand von Unteransprüchen.

In dem erfindungsgemäßen Verfahren zur Übertragung von Daten per Funk wird zur Übertragung ein in eine Mehrzahl von Subträgern aufgeteiltes Frequenzband und einer Mehrzahl von Antennen verwendet. Die Daten werden in eine der Anzahl der Mehrzahl von Subträgern entsprechende Anzahl an von jeder Antenne jeweils zu übertragenden Elementen aufgeteilt. Hierbei wird für jede Antenne jedes Element jeweils einem Subträger zur Übertragung zugeordnet. Mindestens zwei Antennen übertragen auf mindestens einem Subträger unterschiedliche Elemente. Erfindungsgemäß wird vor einer OFDM-Modulation für jede Antenne jedes Element mit einem antennen- und elementspezifischen Faktor multipliziert.

Die Anzahl der Elemente der Daten entspricht der Anzahl an Subträgern. Jede Antenne überträgt jedes Element auf einem Subträger, wobei nicht alle Antennen die Elemente auf den gleichen Subträgern übertragen. Insbesondere ist es möglich, dass ein Element von jeder der Antennen auf einem anderen Subträger übertragen wird. Dies kann auch auf alle Elemente zutreffen. Die OFDM-Modulation dient zur Vorbereitung des Signals zur Versendung, sie umfasst eine inverse Fouriertransformation, bei welcher das Signal von der Frequenzdomäne in die Zeitdomäne transformiert wird. Vor der OFDM-Modulation wird jedes von einer Antenne zu übertragende Element mit einem antennen- und elementspezifischen Faktor multipliziert. Dieser Faktor unterscheidet sich in der Regel für alle von einer Antenne zu versendenden Elemente und auch für jedes von verschiedenen Antennen zu versendendes Element voneinander. Es ist jedoch auch möglich, dass er für verschiedene von einer oder auch von mehreren Antennen zu versendende Elemente gleich ist, wobei jedoch grundsätzlich in die Vorschrift, aus welcher der Faktor bestimmt wird, das jeweilige Element und die jeweilige Antenne eingehen muss.

Insbesondere handelt es sich bei dem Faktor um eine komplexe oder reelle Zahl mit dem Betrag 1. Dies kann realisiert werden durch Multiplikation mit einer Exponentialfunktion mit einem entsprechenden komplexen oder reellen Exponenten. Diese Multiplikation entspricht einer Phasenverschiebung eines Signals.

Die oben genannte Aufgabe hinsichtlich des Verfahrens wird weiterhin gelöst durch ein Verfahren mit den Merkmalen des Anspruchs 3.

Vorteilhafte Ausgestaltungen und Weiterbildungen sind Gegenstand von Unteransprüchen.

In dem Verfahren zur Übertragung von Daten per Funk wird zur Übertragung ein in eine Mehrzahl von Subträgern aufgeteiltes Frequenzband und einer Mehrzahl von Antennen verwendet. Die Daten werden in eine der Anzahl der Mehrzahl von Subträgern entsprechende Anzahl an von jeder Antenne jeweils zu übertragenden Elementen aufgeteilt. Für jede Antenne wird jedes Element jeweils einem Subträger zur Übertragung zugeordnet. Mindestens zwei Antennen übertragen auf mindestens einem Subträger unterschiedliche Elemente. Erfindungsgemäß erfolgt nach einer OFDM-Modulation für mindestens eine Antenne eine Umordnung der zeitlichen Reihenfolge des aufgrund der OFDM-Modulation erfolgten zeitabhängigen Signals.

Während in dem zuerst beschriebenen Verfahren die Multiplikation mit dem antennen- und elementspezifischen Faktor vor der OFDM-Modulation stattfindet, erfolgt die Umordnung der zeitlichen Reihenfolge in dem als zweites beschriebenen Verfahren nach der OFDM-Modulation. Diese beiden Lösungen der oben genannten Aufgabe sind jedoch gleichwertig. So lässt sich mathematisch zeigen, dass die Umordnung der zeitlichen Reihenfolge des Signals nach der OFDM-Modulation gleichbedeutend ist mit der Multiplikation des Signals vor der OFDM-Modulation mit einem entsprechenden antennen- und elementspezifischen Faktor.

Insbesondere erfolgt für mindestens zwei Antennen die Umordnung der zeitlichen Reihenfolge nach einem gemeinsamen Muster. Besonders vorteilhaft ist es, wenn die Umordnung der zeitlichen Reihenfolge für alle Antennen nach einem gemeinsamen Muster erfolgt. Unter einem Muster wird hierbei eine Vorschrift verstanden, nach welcher die Umordnung durchgeführt wird. Bei dem gemeinsamen Muster kann es sich zum Beispiel um eine zyklische Permutation handeln. Bei einer zyklischen Permutation werden Teile des Signals dermaßen auf regelmäßige Art in ihrer Reihenfolge vertauscht, dass nach Ablauf eines Zyklus, im gegebenen Fall nach der Anzahl von Permutationen, welche der Anzahl der Antennen entspricht, die ursprüngliche Reihenfolge wiederhergestellt ist.

In einer Ausgestaltung der Erfindung erfolgt für mindestens zwei Antennen die Zuordnung der Elemente zu Subträgern nach einem gemeinsamen Muster, wie zum Beispiel nach einer zyklischen Permutation. Besonders vorteilhaft ist es, wenn für alle Antennen die Zuordnung der Elemente zu Subträgern nach dem gemeinsamen Muster erfolgt.

Das erfindungsgemäße Verfahren führt zu einer deutlichen Verbesserung gegenüber dem oben beschriebenen Stand der Technik.

Die oben genannte Aufgabe hinsichtlich der Sendevorrichtung wird durch eine Sendevorrichtung mit den Merkmalen des Anspruchs 8 gelöst.

Die Sendevorrichtung zur Übertragung von Daten per Funk über eine Mehrzahl von Antennen verwendet zur Übertragung ein in eine Mehrzahl von Subträgern aufgeteiltes Frequenzband. Die Sendevorrichtung umfasst Mittel zum Aufteilen der Daten in eine der Anzahl der Mehrzahl von Subträgern entsprechende Anzahl an von jeder Antenne jeweils zu übertragenden Elementen auf, sowie Mittel zum Zuordnen der Elemente zu jeweils einem Subträger zur Übertragung für jede Antenne derart, dass mindestens zwei Antennen auf mindestens einem Subträger unterschiedliche Elemente übertragen.

Erfindungsgemäß weist die Sendevorrichtung weiterhin Mittel zum Multiplizieren jedes Elements für jede Antenne mit einem antennen- und elementspezifischen Faktor vor der OFDM-Modulation auf. Alternativ kann sie Mittel zum Umordnen der zeitlichen Reihenfolge des aufgrund der OFDM-Modulation erzeugten zeitabhängigen Signals für mindestens eine Antenne nach der OFDM-Modulation aufweisen.

Die erfindungsgemäße Sendevorrichtung ist insbesondere zur Durchführung eines erfindungsgemäßen Verfahrens geeignet. Hierzu kann sie weitere Mittel aufweisen.

Im folgenden wird die Erfindung anhand eines Ausführungsbeispiels näher erläutert. Dabei zeigen

Figur 1: schematisch den Ablauf eines erfindungsgemäßen Verfahrens,

Figur 2a: einen ersten erfindungsgemäßen Sender,

Figur 2b: einen zweiten erfindungsgemäßen Sender.

Das Ausführungsbeispiel bezieht sich auf ein OFDM-System, z.B. gemäß den Standards IEEE 802.16a oder HIPERLAN/2. Es wird die Übertragung von Daten unter Verwendung von drei Sendeantennen betrachtet.

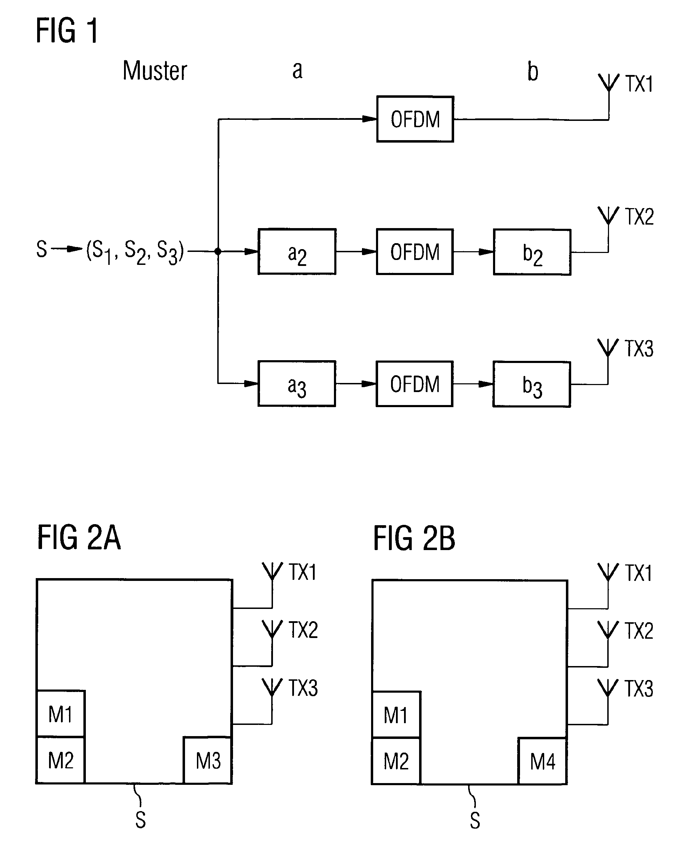

In Figur 1 wird aus den zu versendenden Daten S ein Vektor mit Elementen $S_1$, $S_2$ und $S_3$ gebildet. Bei den Elementen $S_1$, $S_2$ und $S_3$ handelt es sich um Symbole, welche jeweils auf einem Subträger des zur Übertragung der Daten zur Verfügung stehenden Frequenzbandes übertragen werden sollen. Hierbei können in dem OFDM-System eine größere Anzahl als drei Subträger zur Datenübertragung zur Verfügung stehen, welche jedoch für die Erfindung nicht von Relevanz sind.

Der Vektor mit Elementen $S_1$, $S_2$ und $S_3$ wird in drei Äste, welche in die drei Antennen TX1, TX2 und TX3 münden, gespeist. In einem ersten Schritt wird der Vektor mit den Elementen $S_1$, $S_2$ und $S_3$ einer zyklischen Verschiebung bzw. Permutation nach dem Muster a unterworfen, wobei die Verschiebung innerhalb des ersten Astes eine Identitätsoperation darstellt und daher in Figur 1 nicht dargestellt ist, während die Verschiebung in dem zweiten und dem dritten Ast den Vorschriften $a_2$ und $a_3$ gemäß durchgeführt wird. Aus diesem ersten Schritt resultiert dann die folgende Matrix:

$$S_a = \begin{pmatrix} S_1 & S_2 & S_3 \\ S_2 & S_3 & S_1 \\ S_3 & S_1 & S_2 \end{pmatrix}.$$

Die erste Spalte der Matrix $S_a$ stellt hierbei die Symbole $(S_1,S_2,S_3)$ dar, welche über die erste Antenne TX1 versendet werden sollen, die zweite und die dritte Spalte beinhaltet dementsprechend diejenigen Symbole $(S_2,S_3,S_1)$ und $(S_3,S_1,S_2)$, welche von der zweiten und der dritten Antenne TX2 und TX3 zu versenden sind. In der ersten Zeile der Matrix $S_a$ stehen diejenigen Symbole $(S_1,S_2,S_3)$, welche auf dem ersten Subträger zu übertragen sind, in der zweiten und dritten Zeile diejenigen Symbole $(S_2,S_3,S_1)$ und $(S_3,S_1,S_2)$, welche auf dem zweiten und dem dritten Subträger zu übertragen sind. Es ist zu erkennen, dass jede Antenne jedes Element $S_1$, $S_2$ und $S_3$ auf genau einem Subträger überträgt, wobei keines der Elemente $S_1$, $S_2$ und $S_3$ von mehreren Antennen auf dem gleichen Subträger übertragen wird.

Das der Zuordnung der Elemente $S_1$, $S_2$ und $S_3$ zu den Subträgern zugrunde liegende gemeinsame Muster a der zyklischen Verschiebung im Frequenzraum für die drei Antennen TX1, TX2 und TX3 wirkt sich derart aus, dass für die erste Antenne TX1 die drei Elemente $S_1$, $S_2$ und $S_3$ in ihrer ursprünglichen Reihenfolge auf die Subträger verteilt werden. Für die zweite Antenne TX2 nimmt das erste Element $S_1$ den letzten Platz in der obigen Matrixdarstellung ein, wodurch das zweite und das dritte Element $S_2$ und $S_3$ auf die ersten beiden Subträger vorrücken, so dass insgesamt gegenüber der Zuordnung der ersten Antenne TX1 jedes Element $S_1$, $S_2$ und $S_3$ um einen Subträger nach oben geschoben wurde. Für die dritte Antenne TX3 findet in der obigen Matrixdarstellung eine weitere Verschiebung der Reihenfolge der zweiten Antenne TX2 um einen Subträger nach oben statt.

Anschließend findet in der Figur 1 die OFDM-Modulation OFDM statt. Hierbei werden die frequenzabhängigen Signale der einzelnen Antennenäste jeweils einer inversen Fouriertransformation und einer parallel-to-serial Konversion unterworfen.

Hieraus resultiert ein zeitabhängiges Signal. In Matrixform kann dieses Signal folgendermaßen dargestellt werden:

$$\widehat{S}_{OFDM} = \begin{pmatrix} q_1 & q_4 & q_7 \\ q_2 & q_5 & q_8 \\ q_3 & q_6 & q_9 \end{pmatrix}.$$

Die erste Spalte der Matrix $\overset{\wedge}{S}_{OFDM}$ nach erfolgter OFDM-Modulation OFDM stellt hierbei die Symbole $(q_1,q_2,q_3)$ dar, welche über die erste Antenne TX1 versendet werden sollen, die zweite und die dritte Spalte beinhaltet dementsprechend die Symbole $(q_4,q_5,q_6)$ und $(q_7,q_8,q_9)$, welche von der zweiten und der dritten Antenne TX2 und TX3 zu versenden sind. In der ersten Zeile der Matrix $S_{OFDM}$ stehen diejenigen Symbole $(q_1, q_4,q_7)$, welche zu einem ersten Zeitpunkt zu übertragen sind, in der zweiten und dritten Zeile diejenigen Symbole $(q_2,q_5,q_8)$ und $(q_3,q_6,q_9)$, welche zu einem zweiten und dritten Zeitpunkt zu übertragen sind.

In einem weiteren Bearbeitungsschritt wird die Matrix $\overset{\wedge}{S}_{OFDM}$ nach dem Muster b bearbeitet, welches wiederum einer zyklischen Verschiebung entspricht. Die Verschiebung innerhalb des ersten Astes stellt eine Identitätsoperation dar und ist daher in Figur 1 nicht dargestellt, während die Verschiebung in dem zweiten und dem dritten Ast den Vorschriften $b_2$ und $b_3$ gemäß durchgeführt wird. Die Durchführung der zyklischen Verschiebung erfolgt nach dem oben bereits beschriebenen Ablauf, so dass die folgende Matrix resultiert:

$$\widehat{S}_b = \begin{pmatrix} q_1 & q_5 & q_9 \\ q_2 & q_6 & q_7 \\ q_3 & q_4 & q_8 \end{pmatrix}.$$

$\wedge$ Vor der Versendung der Daten S in Form der Matrix $S_b$ wird für jede Antenne TX1, TX2 und TX3 eine Schutzzeit (guard period) hinzugefügt, um Interferenzen zu den darauffolgend zu versendenden Daten zu verringern. Danach versenden die Antennen TX1, TX2 und TX3 die Symbole in der entsprechenden Reihenfolge, für die erste Antenne TX1 also z.B. $q_1$, gefolgt von $q_2$, $q_3$ und der Schutzzeit.

Durch das erfindungsgemäße Verfahren wurde somit eine zyklische Verschiebung im Frequenzbereich, d.h. über die verschiedenen Subträger, kombiniert mit einer zyklischen Verschiebung im Zeitbereich.

Der zweite Schritt der zyklischen Verschiebung im Zeitbereich nach dem Muster b kann, anders als in Figur 1 dargestellt, auch erreicht werden, indem die einzelnen Einträge $S_{a,kl}$ der Matrix $S_a$ mit einem Faktor multipliziert werden gemäß

$$\overset{\wedge}{S}_{b,kl}{}^{vor\ OFDM} = S_{a,kl} \cdot e^{-i \cdot \frac{2\pi}{N} l \delta_k}$$

Demnach wird jeder Eintrag $S_{a,kl}$ der Matrix $S_a$, indiziert mit k und l, multipliziert mit einer Exponentialfunktion. Die Größe N im Exponenten steht hierbei für die Anzahl der Antennen. Die ganzzahlige Verschiebung $\delta_k$ unterliegt der Bedingung

$$0 \le \delta_k \le N\text{-}1.$$

Für zwei Antennen kann die Verschiebung $\delta_k$ z.B. 0 und $\frac{N}{2}$ betragen.

Die als Faktor verwendete Exponentialfunktion ist elementund antennenspezifisch, da die beiden Indizes k und l Bestandteil des Exponenten sind. Die Verschiebung $\delta_k$ kann so bestimmt werden, dass sie im Endeffekt dem Muster b entspricht. Dann resultiert durch die inverse Fouriertransformation bei der OFDM-Modulation aus der Matrix $S_b{}^{vor\ OFDM}$ die oben dargestellt Matrix $S_b$.

In den Figuren 2a und 2b ist jeweils ein erfindungsgemäßer Sender S mit drei Antennen TX1, TX2 und TX3 dargestellt. Dieser umfasst Mittel M1 zum Aufteilen der Daten in Elemente und Mittel M2 zum Zuordnen der Elemente zu jeweils einem Subträger für jede Antenne. Die Zuordnung erfolgt hierbei nach der oben beschriebenen zyklischen Verschiebung. In Figur 2a ist der Fall dargestellt, dass der zweite Bearbeitungsschritt vor der OFDM-Modulation stattfindet. Hierzu weist der Sender S Mittel M3 zum Multiplizieren der Elemente für jede Antenne mit dem antennen- und elementspezifischen Exponentialfaktor auf. Hingegen findet in dem Sender S der Figur 2b der zweite Verarbeitungsschritt, wie auch in Figur 1 dargestellt, nach der OFDM-Modulation statt. Der Sender S der Figur 2b umfasst hierzu Mittel M4 zum Umordnen der zeitlichen Reihenfolge des durch die OFDM-Modulation erhaltenen Signals, wobei diese Umordnung der oben beschriebenen zyklischen Verschiebung entspricht. Zur Durchführung der OFDM-Modulation weisen die beiden Sender zusätzlich nicht dargestellte Mittel auf.

Obwohl im beschriebenen Beispiel die Verschiebung der Signale im Frequenz- und im Zeitraum jeweils in Form einer zyklischen Verschiebung erfolgte, können hierzu auch andere Muster, wie z.B. statistisch zufällige Muster oder andere Verschiebungsvorschriften zum Einsatz kommen.

Der im Empfänger empfangene Signalvektor R ergibt sich aus

$$R = H \cdot S + N,$$

wobei H die Matrix des in Figur 1 dargestellten Übertragungsschemas darstellt, welche mit den Daten S multipliziert wird, und N einen Rauschvektor.

Bei Verwendung von mehr als zwei Sendeantenen wird durch das erfindungsgemäße Verfahren die Bitfehlerrate (BER, Bit Error Rate) der Datenübertragung im Vergleich zum Alamouti-Verfahren reduziert. Ein weiterer Vorteil des erfindungsgemäßen Verfahrens liegt darin, dass es bei einer beliebigen Anzahl von Antennen eingesetzt werden kann. Auch ist die Verwendung eines beliebigen Modulationsalphabets in Kombination mit dem erfindungsgemäßen Verfahren möglich. Weiterhin kann das erfindungsgemäße Verfahren mit einer im Vergleich zum Stand der Technik vereinfachten Struktur des Empfängers verwendet werden.

**Patentansprüche**

1. Verfahren zur Übertragung von Daten (S) per Funk,

   - wobei zur Übertragung ein in eine Mehrzahl von Subträgern aufgeteiltes Frequenzband und eine Mehrzahl von Antennen (TX1, TX2, TX3) verwendet wird,
   - wobei die Daten (S) in eine der Anzahl der Mehrzahl von Subträgern entsprechende Anzahl an von jeder Antenne (TX1, TX2, TX3) jeweils zu übertragenden Elementen ($S_1$, $S_2$, $S_3$) aufgeteilt werden,
   - wobei für jede Antenne (TX1, TX2, TX3) jedes Element ($S_1$, $S_2$, $S_3$) jeweils einem Subträger zur Übertragung zugeordnet wird,
   - wobei mindestens zwei Antennen (TX1, TX2, TX3) auf mindestens einem Subträger unterschiedliche Elemente ($S_1$, $S_2$, $S_3$) übertragen,

**dadurch gekennzeichnet,**

- **dass** vor einer OFDM-Modulation (OFDM) für jede Antenne (TX1, TX2, TX3) jedes Element ($S_1$, $S_2$, $S_3$) mit einem antennen- und elementspezifischen Faktor multipliziert wird.

2. Verfahren nach Anspruch 1, **dadurch gekennzeichnet,**
   **dass** es sich bei dem Faktor um eine komplexe oder reelle Zahl mit dem Betrag eins handelt.

3. Verfahren zur Übertragung von Daten (S) per Funk,

   - wobei zur Übertragung ein in eine Mehrzahl von Subträgern aufgeteiltes Frequenzband und eine Mehrzahl von Antennen (TX1, TX2, TX3) verwendet wird,
   - wobei die Daten (S) in eine der Anzahl der Mehrzahl von Subträgern entsprechende Anzahl an von jeder Antenne (TX1, TX2, TX3) jeweils zu übertragenden Elementen ($S_1$, $S_2$, $S_3$) aufgeteilt werden,
   - wobei für jede Antenne (TX1, TX2, TX3) jedes Element ($S_1$, $S_2$, $S_3$) jeweils einem Subträger zur Übertragung zugeordnet wird,
   - wobei mindestens zwei Antennen (TX1, TX2, TX3) auf mindestens einem Subträger unterschiedliche Elemente ($S_1$, $S_2$, $S_3$) übertragen,

   **dadurch gekennzeichnet,**

   - **dass** nach einer OFDM-Modulation (OFDM) für mindestens eine Antenne (TX1, TX2, TX3) eine Umordnung der zeitlichen Reihenfolge des aufgrund der OFDM-Modulation (OFDM) erzeugten zeitabhängigen Signals erfolgt.

4. Verfahren nach Anspruch 3, **dadurch gekennzeichnet,**
   **dass** für mindestens zwei Antennen (TX1, TX2, TX3) die Umordnung der zeitlichen Reihenfolge nach einem gemeinsamen Muster (b) erfolgt.

5. Verfahren nach Anspruch 4, **dadurch gekennzeichnet,**
   **dass** es sich bei dem gemeinsamen Muster (b) um eine zyklische Permutation handelt.

6. Verfahren nach Anspruch einem der Ansprüche 1 bis 5, **dadurch gekennzeichnet,**
   **dass** für mindestens zwei Antennen (TX1, TX2, TX3) die Zuordnung der Elemente ($S_1$, $S_2$, $S_3$) zu Subträgern nach einem gemeinsamen Muster (a) erfolgt.

7. Verfahren nach Anspruch 6, **dadurch gekennzeichnet,**
   **dass** es sich bei dem gemeinsamen Muster (a) um eine zyklische Permutation handelt.

8. Sendevorrichtung (S) zur Übertragung von Daten (S) per Funk über eine Mehrzahl von Antennen (TX1, TX2, TX3),

   - wobei zur Übertragung ein in eine Mehrzahl von Subträgern aufgeteiltes Frequenzband verwendet wird,
   - mit Mitteln (M1) zum Aufteilen der Daten (S) in eine der Anzahl der Mehrzahl von Subträgern entsprechende Anzahl an von jeder Antenne (TX1, TX2, TX3) jeweils zu übertragenden Elementen ($S_1$, $S_2$, $S_3$),
   - mit Mitteln (M2) zum Zuordnen der Elemente ($S_1$, $S_2$, $S_3$) zu jeweils einem Subträger zur Übertragung für jede Antenne (TX1, TX2, TX3) derart, dass mindestens zwei Antennen (TX1, TX2, TX3) auf mindestens einem Subträger unterschiedliche Elemente ($S_1$, $S_2$, $S_3$) übertragen,

   **dadurch gekennzeichnet,**

   - **dass** sie Mittel (M3) zum Multiplizieren jedes Elements ($S_1$, $S_2$, $S_3$) für jede Antenne (TX1, TX2, TX3) mit einem antennen- und elementspezifischen Faktor vor der OFDM-Modulation (OFDM) aufweist, oder
   - **dass** sie Mittel (M4) zum Umordnen der zeitlichen Reihenfolge des aufgrund der OFDM-Modulation (OFDM) erzeugten zeitabhängigen Signals für mindestens eine Antenne (TX1, TX2, TX3) nach der OFDM-Modulation (OFDM) aufweist.

## FIG 1

## FIG 2A

## FIG 2B

**Europäisches**
**Patentamt**

**EUROPÄISCHER RECHERCHENBERICHT**

Nummer der Anmeldung

EP 03 00 8902

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | LI Y ET AL: "TRANSMITTER DIVERSITY FOR OFDM SYSTEMS AND ITS IMPACT ON HIGH-RATE DATA WIRELESS NETWORKS" IEEE JOURNAL ON SELECTED AREAS IN COMMUNICATIONS, IEEE INC. NEW YORK, US, Bd. 17, Nr. 7, Juli 1999 (1999-07), Seiten 1233-1243, XP000834945 ISSN: 0733-8716 Kapitel II B * Abbildung 1B * | 1-8 | H04B7/06 H04L27/26 |
| Y,D | DAMMANN A ET AL: "Low complex standard conformable antenna diversity techniques for OFDM systems and its application to the DVB-T system" 4TH INTERNATIONAL ITG CONFERENCE SOURCE AND CHANNEL CODING, BERLIN, GERMANY, 28-30 JAN. 2002, Nr. 170, Seiten 253-259, XP002255841 ITG-Fachbericht, 2002, VDE-Verlag, Germany ISSN: 0932-6022 Kapitel II B,C * Abbildung 4 * | 1-8 | |
| | | | RECHERCHIERTE SACHGEBIETE (Int.Cl.7) |
| A | US 2001/033623 A1 (HOSUR SRINATH) 25. Oktober 2001 (2001-10-25) * Absatz [0006] * * Absatz [0020]; Abbildung 3 * * Anspruch 1 * | 1-8 | H04B H04L |

Der vorliegende Recherchenbericht wurde für alle Patentansprüche erstellt

| Recherchenort | Abschlußdatum der Recherche | Prüfer |
|---|---|---|
| DEN HAAG | 26. September 2003 | Sieben, S |

KATEGORIE DER GENANNTEN DOKUMENTE

X : von besonderer Bedeutung allein betrachtet
Y : von besonderer Bedeutung in Verbindung mit einer
　　anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
　　nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes
　　Dokument

EPO FORM 1503 03.82 (P04C03)

**EP 1 469 613 A1**

**ANHANG ZUM EUROPÄISCHEN RECHERCHENBERICHT
ÜBER DIE EUROPÄISCHE PATENTANMELDUNG NR.**

EP 03 00 8902

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-09-2003

| Im Recherchenbericht angeführtes Patentdokument | Datum der Veröffentlichung | Mitglied(er) der Patentfamilie | Datum der Veröffentlichung |
|---|---|---|---|
| US 2001033623 A1 | 25-10-2001 | KEINE | |

Für nähere Einzelheiten zu diesem Anhang : siehe Amtsblatt des Europäischen Patentamts, Nr.12/82

EPO FORM P0461

9